# FASCICULE DE BREVET EUROPEEN

(11) **EP 0 960 387 B1**
(45) Date de publication et mention de la délivrance du brevet: **16.05.2001**
(21) Numéro de dépôt: 98901924.5
(22) Date de dépôt: 19.02.1998
(51) Int. Cl.: G06K 19/077

(54) **ETIQUETTE RF COMPORTANT UN CIRCUIT INTEGRE ASSOCIE A DES ELEMENTS A PERMEABILITE ELEVEE**
RF ETIKETTE MIT EINER INTEGRIERTEN SCHALTUNG, DIE MIT ELEMENTEN VON GROSSER PERMEABILITÄT VERBUNDEN IST
RF LABEL COMPRISING AN INTEGRATED CIRCUIT ASSOCIATED WITH HIGHLY PERMEABLE ELEMENTS

(30) Priorité: 19.02.1997 CH 37697
(43) Date de publication de la demande: 01.12.1999
(73) Titulaire: NJC Innovations SARL, 1110 Morges (CH)
(72) Inventeur: BERNEY, Jean, Claude, CH-1343 Les Charbonnières (CH)
(74) Mandataire: Gresset, Jean
(86) Numéro de dépôt international: CH9800065
(87) Numéro de publication internationale: WO9837511

(56) Documents cités:
- EP-A- 0 554 581
- EP-A- 0 750 276
- DE-C- 3 721 822
- US-A- 5 567 537

## Description

Il existe sur le marché de nombreuses formes d'exécution d'étiquettes électroniques de type RF (radio fréquence) soit à lecture seule, soit à lecture/écriture. Ces étiquettes comportent généralement un circuit intégré mémoire relié électriquement à une voir plusieurs bobines externes. Ces bobines permettent, lorsqu'elles se trouvent dans le champ de l'appareil de lecture/écriture, de générer une tension qui peut être redressée pour alimenter l'étiquette. Ces bobines permettent également d'assurer la transmission des informations entre l'appareil de lecture/écriture et l'étiquette, par exemple par modulation du courant consommé par cette dernière. Les étiquettes RF comportent également le plus souvent un condensateur externe permettant par exemple de filtrer la tension d'alimentation. Les premières étiquettes mises sur le marché travaillaient à une fréquence basse de l'ordre de 100 kHz, si bien que la valeur de cette capacité de filtrage était relativement grande. Actuellement, certains types d'étiquettes RF travaillent à une fréquence de 10 Mhz et plus, ce qui permet de réduire d'un facteur 100 la valeur de la capacité. Il est dès lors possible de réaliser directement cette capacité dans le circuit intégré. Actuellement, il est également possible de réaliser des bobines directement sur le circuit intégré par exemple par des moyens photolithographiques. Un tel dispositif est décrit dans le document EP-A-750 276. Cette solution est idéale dans la mesure où tous les composants de l'étiquette RF peuvent être réalisés sur le circuit intégré pendant le processus de fabrication de celui-ci, et où toutes les connexions électriques vers l'extérieur sont supprimées. Il y a cependant certaines contraintes qui limitent actuellement les performances de ce type d'étiquette.

Premièrement le nombre de spires des bobines que l'on peut réaliser directement sur le circuit intégré est très limité. Deuxièmement, pour des raisons de coût, la surface du circuit intégré ne peut pas être agrandie de manière inconsidérée. Ainsi la surface de la bobine ne peut être que de quelques mm². Or on sait que la tension induite dans la bobine est proportionnelle au nombre de spires et au flux qui est lui-même proportionnel à la surface de la spire. Comme les valeurs de ces deux paramètres sont très petites, les performances des systèmes connus sont très limitées. Ainsi, dans l'état actuel de la technique, les étiquettes RF complètement intégrées ne peuvent-elles être lues qu'à très courte distance, de l'ordre du millimètre. Cela représente bien sûr une limitation très importante à leur utilisation.

Le but de la présente invention est d'apporter une solution simple à ce problème. Elle concerne une étiquette RF comportant au moins un circuit intégré et une bobine, caractérisée par le fait que ladite bobine est réalisée directement à la surface dudit circuit intégré, ce dernier étant fixé sur au moins un élément à perméabilité élevée agencé de manière à concentrer le flux magnétique extérieur sur ladite bobine.

La figure 1 représente schématiquement à titre d'exemple un circuit intégré selon l'invention comportant deux bobines à sa surface.

La figure 2 représente schématiquement à titre d'exemple la disposition dans le champ magnétique d'un tel circuit intégré dans les application connues actuellement.

La figure 3 représente schématiquement à titre d'exemple un tel circuit intégré fixé sur un élément à perméabilité élevée selon l'invention.

La figure 4 représente schématiquement à titre d'exemple un tel circuit intégré fixé en sandwitch entre deux éléments à perméabilité élevée selon l'invention.

La figure 5 représente schématiquement à titre d'exemple une étiquette selon l'invention intégrée à une carte à puce.

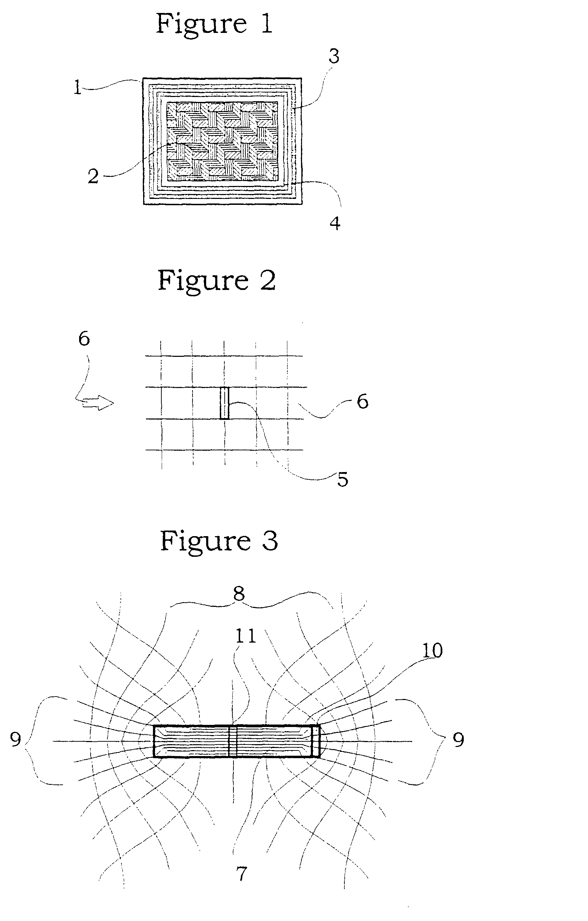

La figure 1 représente schématiquement à titre d'exemple un circuit intégré selon l'invention comportant deux bobines à sa surface. Ce circuit intégré est réalisé sur une plaquette de silicium 1 sur laquelle est implanté le circuit électronique de l'étiquette 2, particulièrement la partie logique, le circuit mémoire, ainsi que certains composants spéciaux tels que résistances et capacités. Dans le cas représenté, le circuit intégré comporte deux bobines 3 et 4 réalisées par photolithographie dans une couche métallique déposée préalablement et séparée des autres composants du circuit intégré par une couche isolante. Les bobines 3 et 4 sont connectées au circuit électronique de l'étiquette pas des zones de contact non représentées. On peut constater premièrement qu'il n'y a plus de liaisons électriques entre le circuit intégré et l'extérieur puisque tous les composants de l'étiquette RF sont réunis sur le circuit intégré. Il n'y a donc plus de pads comme dans les circuits intégrés habituels. Deuxièmement, même si les deux bobines sont placées à la périphérie du circuit intégré, la surface couverte par les spires est très faible. Par exemple pour un circuit intégré de 2mm/2mm, cette surface ne dépasse pas 3mm². Par ailleurs toutes les spires doivent être réalisées en surface ce qui limite leur nombre à quelques unités. On est donc loin d'une bobine classique qui peut avoir plusieurs centaines de spires et couvrir une surface de plusieurs cm². Or la tension induite aux bornes de la bobine est U = n dφ/dt. Comme le nombre de spires n est limité. il y a deux possibilités d'augmenter la tension induite en augmentant le dφ/dt. Premièrement on peut augmenter la fréquence, mais on ne peut pas aller au delà d'une dizaine de mégahertz en raison de la vitesse limitée des circuits CMOS à faible consommation utilisés dans ce genre d'étiquette. Deuxièmement on peut concentrer le flux sur les bobines comme proposé dans la présente invention, ce que nous allons développer aux figures suivantes.

La figure 2 représente schématiquement à titre d'exemple la disposition dans le champ magnétique d'un tel circuit intégré dans les application connues actuellement. Si on se trouve à une certaine distance de l'appareil de lecture/écriture, on peut admettre que la répartition du champ magnétique est uniforme. Le circuit intégré 5 placé dans ce champ ne va être traversé que par un flux très faible, soit dans le cas représenté une seule ligne de flux 6. Pour concentrer le flux sur le circuit intégré il faut utiliser un élément à perméabilité élevée comme représenté à la figure 3.

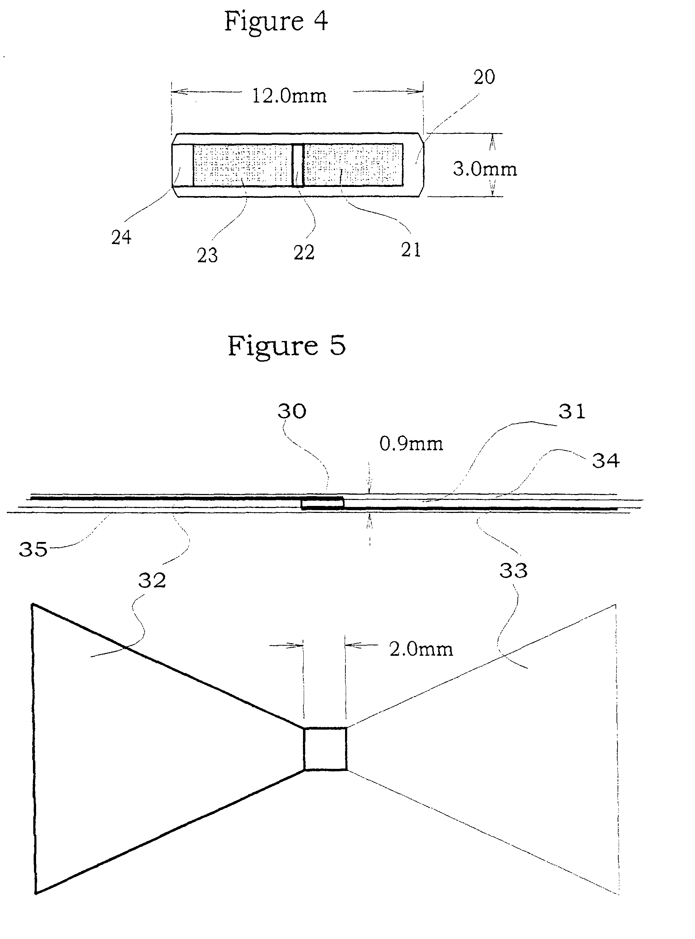

La figure 3 représente schématiquement à titre d'exemple un tel circuit intégré fixé sur un élément à perméabilité élevée selon l'invention. Cet élément peut être un simple bâtonnet de ferrite 7 qui agit comme un court-circuit magnétique. Ce court-circuit déforme les lignes du champ magnétique 8, et le flux va passer de manière préférentielle à l'intérieur de ce court-circuit. On voit qu'à l'extrémité du bâtonnet de ferrite 7 passent 4 lignes de flux 9. Si l'on fixe le circuit intégré 10 à cette extrêmité, par exemple par collage, il va être traversé par une quantité de flux plusieurs fois supérieure à la configuration de la figure 2. On a déjà là une très forte augmentation. Mais on peut constater qu'au centre du bâtonnet de ferrite 11, la concentration de flux est encore beaucoup élevée. Il y passe 10 lignes de flux. Si on pouvait fixer le circuit intégré à cet endroit, celui-ci serait traversé par un flux encore beaucoup plus important que dans la configuration de la figure 2. C'est ce que nous allons voir à la figure 4.

La figure 4 représente schématiquement à titre d'exemple un tel circuit intégré fixé en sandwitch entre deux éléments à perméabilité élevée selon l'invention. Cette figure montre une manière simple de réaliser cette configuration. L'étiquette comporte un boitier de forme allongée en matière synthétique 20 comportant un logement dans laquelle on place un premier élément de perméabilité élevée, par exemple une ferrite 21, puis le circuit intégré comportant la ou les bobines 22, et enfin un deuxième élément de perméabilité élevée 23. Ces éléments 21, 22, 23, sont fixés librement les uns par rapport aux autres sans collage ni autre moyen de fixation dans la mesure où il n'y a pas besoin de liaisons électriques ni physiques particulières entre ces éléments pour assurer le bon fonctionnement du système. Le boitier 20 est fermé par exemple par un bouchon de colle 24 assurant le maintien en place des différents éléments. Dans ce cas de figure le boitier 20 assure une protection mécanique des éléments 21, 22 et 23. Le circuit intégre 22 est ainsi placé en sandwitch entre les deux éléments à haute perméabilité 21 et 23 de manière qu'un maximum de flux soit concentré sur ce circuit intégré 22. Ce dernier crée bien sûr un entrefer, mais celui-ci est pratiquement négligeable dans la mesure où ce type de circuits intégrés de faibles dimensions peuvent avoir une épaisseur réduite à 8 mils, soit environ 0,2 mm.

La figure 5 représente schématiquement à titre d'exemple une étiquette selon l'invention intégrée à une cane à puce. Dans cette configuration particulière l'introduction de la fonction RF dans le circuit intégré permettrait de réaliser une carte à puce sans contacts. Toutefois il est nécessaire d'obtenir une épaisseur totale de l'ordre du millimètre, compatible avec ce type de cartes. Dans ce cas, le circuit intégré 30 est incorporé dans un dégagement d'une feuille intermédiaire en matière synthétique 31. La face supérieure de cette feuille intermédiaire 31 comporte une couche mince de 0,2mm en matériau à haute perméabilité 32, alors que sa face inférieure comporte une couche mince de 0,2 mm en matériau de haute perméabilité 33. Le tout est recouvert de chaque côté de couches de protection 34, 35 de 0,1mm d'épaisseur. On voit que dans cette configuration le circuit intégré 30 est pris en sandwitch entre ces couches minces 32, 33, sans que la hauteur totale ne dépasse 0.9 mm. Ces couches minces 32 et 33 pourraient être formées de tôles minces ayant la forme voulue. Toutefois on sait que la ferrite est formée de particules d'oxydes de fer compressées dans un liant. Il serait donc possible de déposer des couches minces de ce matériau par sérigraphie ou pochage avant durcissement, de manière à simplifier la fabrication en batches ou en bande de ce type de cartes à puce.

Bien sûr, de nombreuses autres configurations selon l'invention sont possibles, mais leur description n'apporterait pas d'éléments supplémentaires à la compréhension de celle-ci.

## Revendications

1. Etiquette RF comportant un circuit intégré à la surface duquel est réalisée au moins une bobine (3, 4, 22) destinée à capter un flux magnétique, caractérisée en ce que le circuit intégré est fixé en sandwich entre deux éléments à perméabilité élevée (21, 23, 32, 33) de manière à ce qu'un maximum du flux magnétique soit concentré sur la bobine.

2. Etiquette RF selon la revendication 1, caractérisée en ce que le circuit intégré (30) est incorporé dans une carte à puce, les deux éléments à perméabilité élevée (32, 33) étant disposés de chaque côté de la carte.

3. Etiquette RF selon l'une des revendications 1 et 2, caractérisée en ce que lesdits deux éléments sont réalisés par dépôt de particules à perméabilité élevée mélangées à un liant.

4. Etiquette RF selon l'une des revendications 1 et 2, caractérisée en ce que lesdits deux éléments sont réalisés par sérigraphie.

## Claims

1. Radio frequency tag including an integrated circuit at the surface of which at least one coil (3, 4, 22) intended to pick up a magnetic flux is formed, characterised in that the integrated circuit is sandwiched between two elements of high permeability (21, 23, 32, 33) so that as much of the magnetic flux as possible is concentrated on the coil.

2. Radio frequency tag according to claim 1, characterised in that the integrated circuit (30) is incorporated in a smart card, the two elements of high permeability (32, 33) being arranged on each side of the card.

3. Radio frequency tag according to claims 1 or 2, characterised in that said two elements are made by depositing particles of high permeability mixed with a binding agent.

4. Radio frequency tag according to claims 1 or 2, characterised in that said two elements are made by screen printing.

## Patentansprüche

1. R.F.-Etikett mit einer integrierten Schaltung, an deren Oberfläche wenigstens eine Spule (3, 4, 22) ausgeführt ist, die dazu bestimmt ist, einen Magnetfluss aufzufangen, dadurch gekennzeichnet, dass die integrierte Schaltung zwischen zwei Elementen mit hoher Permeabilität (21, 23, 32, 33) eingefügt und befestigt ist, so dass ein Maximum des Magnetflusses auf die Spule konzentriert wird.

2. R.F.-Etikett nach Anspruch 1, dadurch gekennzeichnet, dass die integrierte Schaltung (30) in einer Chip-Karte eingebaut ist, wobei die beiden Elemente mit hoher Permeabilität (32, 33) je auf einer Seite der Karte angeordnet sind.

3. R.F.-Etikett nach einem der Ansprüche 1 und 2, dadurch gekennzeichnet, dass die beiden Elemente durch Niederschlag von Partikeln mit hoher Permeabilität, die mit einem Bindemittel vermischt sind, realisiert sind.

4. R.F.-Etikett nach einem der Ansprüche 1 und 2, dadurch gekennzeichnet, dass die beiden Elemente durch Serigraphie realisiert sind.
